# EUROPÄISCHE PATENTSCHRIFT

(11) **EP 3 034 702 B1**
(45) Veröffentlichungstag und Bekanntmachung des Hinweises auf die Patenterteilung: **01.02.2017**
(21) Anmeldenummer: 14198520.0
(22) Anmeldetag: 17.12.2014
(51) Int. Cl.: E02D 7/00, E02D 17/16, E02D 27/52

(54) **VERFAHREN UND VORRICHTUNG ZUM ERSTELLEN EINER GRÜNDUNG SOWIE GRÜNDUNG**
METHOD AND DEVICE FOR ERECTING A FOUNDATION AND FOUNDATION
PROCÉDÉ ET DISPOSITIF DESTINÉS À L'ÉTABLISSEMENT D'UNE FONDATION ET FONDATION

(43) Veröffentlichungstag der Anmeldung: 22.06.2016
(73) Patentinhaber: BAUER Spezialtiefbau GmbH, 86529 Schrobenhausen (DE)
(72) Erfinder: Scheller, Paul, 85737 Ismaning (DE); Schröppel, Christoph, 86655 Harburg (DE)
(74) Vertreter: Wunderlich, Rainer

(56) Entgegenhaltungen:
- DE-A1-102011 111 036
- DE-C1- 10 155 105

## Beschreibung

Die Erfindung betrifft ein Verfahren zum Erstellen einer Gründung, bei dem ein Gründungsrohr in einen Boden eingerammt wird, gemäß dem Oberbegriff des Anspruchs 1.

Des Weiteren betrifft die Erfindung eine Gründung mit einem Gründungsrohr, welches in einen Boden eingerammt ist, gemäß dem Oberbegriff des Anspruchs 11.

Des Weiteren betrifft die Erfindung eine Vorrichtung zum Erstellen einer Gründung mit einem Gründungrohr im Boden, mit einer Arbeitsplattform mit einer Rammvorrichtung zum Einrammen des Gründungsrohres in den Boden, gemäß dem Oberbegriff des Anspruchs 12.

Ein gattungsgemäßer Stand der Technik zum Einbringen eines Gründungsrohres in einen Meeresboden geht aus der DE 10 2011 111 036 A1 hervor. Zur Gründung einer Offshore-Windenergieanlage wird ein Gründungsrohr mit einem Durchmesser von mehreren Metern von einem schwimmenden Ponton aus mit einer Rammvorrichtung in einen Meeresgrund eingetrieben. Als Rammvorrichtung wird die Verwendung eines Rüttlers vorgeschlagen. Um die aufzubringenden Kräfte und die Lärmentwicklung zu vermindern, wird in dieser Druckschrift gelehrt, durch die Rammvorrichtung hindurch ein Bohrwerkzeug an einer Bohrstange zu führen, um den Boden zu lockern. Das Bohrwerkzeug hat dabei einen Bohrdurchmesser, welcher etwa dem Durchmesser des einzubringenden Gründungsrohres entspricht.

Bohrvorrichtungen und Bohrwerkzeuge zum Erstellen einer Bohrung mit einem Bohrdurchmesser von mehreren Metern, welche bei Gründungsrohren von Windkraftanlagen bis zu 7 m und mehr betragen können, sind sehr groß, schwer und damit kostenaufwändig. Derartig große und schwere Anlagen können nur mit entsprechend großem Handhabungsgerät, insbesondere Kränen, bewegt und eingestellt werden. Zudem bildet sich beim Bohren großer Bohrdurchmesser unter Wasser eine erhebliche Eintrübung und damit Umweltbelastung des umgebenden Wassers durch Bohrklein aus.

Aus der CH 622 305 A5 geht ein Verfahren zum lärmarmen Einbringen von Stahlpfählen in den Boden hervor. Dabei wird der Bodenbereich, in welchen ein Stahlträger eingerammt wird, vorab durch eine Bohrung aufgelockert. Der Durchmesser der Bohrung entspricht ebenfalls etwa der Querschnittsgröße des einzurammenden Stahlpfahles.

Der Erfindung liegt die **Aufgabe** zugrunde, ein Verfahren und eine Vorrichtung zum Erstellen einer Gründung sowie eine Gründung anzugeben, wobei ein Gründungsrohr auch mit großen Rohrdurchmessern effizient sowie mit hoher Trag- und Standfestigkeit in den Boden einbringbar ist.

Die Erfindung wird durch ein Verfahren mit den Merkmalen des Anspruchs 1, eine Gründung mit den Merkmalen des Anspruchs 11 beziehungsweise einer Vorrichtung mit den Merkmalen des Anspruchs 12 gelöst. Bevorzugte Ausführungsformen der Erfindung sind in den jeweils abhängigen Ansprüchen angegeben.

Das erfindungsgemäße Verfahren ist dadurch gekennzeichnet, dass vor dem Einrammen mittels eines Bohrwerkzeuges, dessen Bohrdurchmesser wesentlich kleiner als ein Durchmesser des Gründungsrohres ist, mindestens eine Bohrung in den Boden im Umfangsbereich des einzubringenden Gründungsrohres erstellt wird, und dass beim Bohren abgetragenes Bodenmaterial im Wesentlichen in der Bohrung verbleibt.

Eine Grundidee des erfindungsgemäßen Verfahrens besteht darin, beim Einrammen eines Gründungsrohres in den Boden diesen durch vorausgehendes Bohren aufzulockern. Allerdings erfolgt die Auflockerung nicht über den gesamten Querschnitt des einzubringenden Gründungsrohres, sondern lediglich im Bereich einer Umfangswand des Gründungsrohres. Das Erstellen der Bohrungen kann so mit herkömmlichen und damit kostengünstigen Bohrvorrichtungen und Bohrwerkzeugen erstellt werden. Zudem können die Bohrungen mit einem relativ kleinen Bohrdurchmesser von vorzugsweise unter 2 m, vorzugsweise zwischen 20 cm und 80 cm erstellt werden. Derartige Bohrungen können lärmarm sowie effizient hergestellt werden.

Zudem ergibt sich bei dem erfindungsgemäßen Verfahren ein weiterer Vorteil dadurch, dass innerhalb des Gründungsrohres kaum aufgelockertes Bodenmaterial anfällt und verbleibt. Dies wirkt sich positiv auf die Trag- und Standfestigkeit des Gründungsrohres im Boden aus. Insgesamt muss weniger Bodenmaterial aufgebohrt und abgetragen werden. Dies ist sowohl energiesparend als auch umweltschonend.

Gemäß einer Weiterbildung des erfindungsgemäßen Verfahrens ist vorgesehen, dass mehrere Bohrungen erstellt werden, welche in den Boden ringförmig entlang des Umfangbereiches des einzubringenden Gründungsrohres angeordnet werden. Insbesondere werden die Bohrungen gleichmäßig beabstandet entlang des Umfangs des Gründungsrohres eingebracht. Das Gründungsrohr weist dabei vorzugsweise einen Durchmesser von 2 m bis 10 m oder mehr auf. Die Bohrungen können durch herkömmliche Drehbohrverfahren, insbesondere mit einer Bohrschnecke erstellt werden, und weisen vorzugsweise Bohrdurchmesser zwischen 0,2 m und 2 m auf.

Eine besonders gute Auflockerung wird nach einer Verfahrensvariante der Erfindung dadurch erzielt, dass die Bohrungen berührend oder überlappend angeordnet sind. Somit ist der gesamte Bereich entlang des Gründungsrohres durch Bohrungen aufgelockert. Das Gründungsrohr kann somit mit relativ geringen Kräften in den Bodenbereich eingetrieben werden.

Alternativ kann es nach der Erfindung vorgesehen sein, dass benachbarte Bohrungen mit einem Abstand zueinander erstellt werden, wobei ein Bodensegment zwischen den benachbarten Bohrungen verbleibt. In dem Bereich der verbliebenen Bodensegmente zwischen den benachbarten Bohrungen kann eine erhöhte Wandreibung zwischen dem Bodensegment mit dem unveränderten anstehenden Boden und der Wandung des Gründungsrohres erreicht werden. Der Abstand der Bohrungen zueinander und somit die Erstreckung der Bodensegmente in Umfangsrichtung des Gründungsrohres kann abhängig von der Festigkeit des Bodens ausgewählt und eingestellt werden.

Eine weitere Beeinflussung der Einrammkräfte und der Tragfähigkeit der Gründung kann nach einer Weiterbildung des erfindungsgemäßen Verfahrens dadurch erzielt werden, dass mindestens eine Bohrung bis zu einer Bohrtiefe abgeteuft wird, welche kleiner oder gleich der Einrammtiefe des Gründungsrohres ist. Beispielsweise kann die eine oder die mehreren Bohrungen etwa nur zur Hälfte der vorgesehenen Einrammtiefe des Gründungsrohres abgeteuft werden. Somit lässt sich das Gründungsrohr in der ersten Hälfte mit verminderten Kräften in den Boden einbringen, was eine gute Führung und Justierung des Gründungsrohres fördert. In der zweiten Hälfte des Einrammens wird das Gründungsrohr dann in den unveränderten anstehenden Boden eingebracht, so dass in dieser Hälfte sich erhöhte Reibungskräfte und damit eine erhöhte Tragfähigkeit ergeben.

Weiterhin ist es nach einer Ausführungsform der Erfindung bevorzugt, dass das Gründungsrohr in den Boden mittels einer Rammvorrichtung eingetrieben wird, welche als ein schlagender Rammhammer oder ein oszillierender Rüttler ausgebildet ist. Dabei können mit einem schlagenden Rammhammer, insbesondere einem Dieselhammer, große Rammkräfte als Schlagimpulse aufgebracht werden. Eine lärmärmere Einbringungsvariante besteht darin, das Gründungsrohr mit einem oszillierenden Rüttler, insbesondere einem Vibrationsbär mit rotierenden Unwuchten, in den Boden einzutreiben. Rammen im Sinne der Erfindung ist also ein Verfahren, bei welchem im Wesentlichen ohne Abtragung von Bodenmaterial das Gründungsrohr durch Kraftaufbringung in den Boden eingetrieben wird.

Das Verfahren ist grundsätzlich an Land durchführbar. Eine besonders vorteilhafte Variante des erfindungsgemäßen Verfahrens besteht darin, dass das Gründungsrohr zum Bilden einer Unterwassergründung in den Boden eines Gewässers eingetrieben wird. Das Verfahren ist insbesondere zur Gründung von Offshore-Windanlagen mit Gründungsrohren mit Durchmessern von mehreren Metern vorteilhaft. Die Gründungen können aber nicht nur in einem Meeresgrund sondern auch an einem Seegrund oder in einem Flussgrund ausgebildet werden.

Gemäß einer anderen Weiterbildung der Erfindung ist es bevorzugt, dass das Bohrwerkzeug drehend von einer Bohrvorrichtung angetrieben wird, welche entlang des Umfangs des einzubringenden Krümmungsrohres auf einer Arbeitsplattform verstellbar ist. Die Arbeitsplattform kann dabei insbesondere ein Ponton oder ein sogenanntes Template sein, welches auf den Gewässergrund absenkbar und darauf justierbar ist. Bei der Ausbildung der Arbeitsplattform als ein schwimmendes Ponton kann die Bohrvorrichtung ein herkömmliches Bohrgerät auf einem verfahrbaren Unterwagen sein. Die Bohrvorrichtung ist also selbsttätig verfahrbar und kann zu verschiedenen Bohrpositionen an unterschiedlichen Stellen der Arbeitsplattform verfahren werden. Alternativ kann das Bohrwerkzeug auch durch eine sogenannte fliegende Bohrvorrichtung angetrieben werden, welche mittels einer Seilaufhängung und einem Kran zu den einzelnen Bohrpositionen bewegt und dort an entsprechenden Halterungen befestigt und justiert wird. Eine derartige Bohrvorrichtung ist auch für ein Unterwasserbohren geeignet. Weiterhin kann die Bohrvorrichtung an einer Verstellvorrichtung entlang des Umfangs des Gründungsrohres an der Arbeitsplattform gelagert sein, so dass die Bohrvorrichtung etwa durch einen Stellmotor entlang einer Führungsbahn verfahrbar ist.

Eine bevorzugte Weiterbildung der Erfindung besteht darin, dass die Arbeitsplattform an der Oberfläche des Gewässers schwimmt oder auf den Boden des Gewässers abgesenkt wird. Grundsätzlich kann die Arbeitsplattform sowohl schwimmfähig als auch absenkbar sein.

Gemäß einer Ausführungsvariante der Erfindung ist es vorteilhaft, dass an der Arbeitsplattform mindestens eine ringförmige Bohrführung vorgesehen ist, welche entsprechend den Positionen der einzubringenden Bohrungen Führungseinrichtungen für das Bohrwerkzeug aufweist. Die ringförmige Bohrführung ist eine Bohrlehre, welche eine Vielzahl von Führungseinrichtungen zum axialen Führen des Bohrwerkzeuges an den gewünschten Positionen aufweist. Die Führungseinrichtungen können insbesondere Führungshülsen sein, deren Innendurchmesser passend zu den Außendurchmessern der Bohrwerkzeuge dimensioniert sind. Vorzugsweise sind zwei Bohrführungen an der Arbeitsplattform vorgesehen, nämlich eine erste obere Bohrführung und eine zweite untere Bohrführung. Die untere Bohrführung kann vorzugsweise von der Arbeitsplattform abgesenkt werden, insbesondere bis diese auf dem Gewässergrund aufliegt. Mit dieser Bohrführung kann ein besonders exaktes Niederbringen der einzelnen Bohrungen erfolgen. Vorzugsweise sind die Bohrungen ringförmig so angeordnet, dass die Wand des Gründungsrohres etwa mittig durch die ringförmig angeordneten Bohrungen mit dem gelockerten Bodenmaterial durchläuft.

Die erfindungsgemäße Gründung ist dadurch gekennzeichnet, dass in dem Boden im Umfangsbereich des Gründungsrohres vor dem Einrammen mindestens eine Bohrung eingebracht ist, deren Bohrungsdurchmesser wesentlich kleiner als ein Durchmesser des Gründungsrohres ist, und dass die mindestens eine Bohrung mit Bodenmaterial verfüllt ist, welches beim Erstellen der Bohrung anfällt. Der Bohrungsdurchmesser ist dabei größer als die Wand des Gründungsrohres und beträgt üblicherweise zwischen 5% bis 30% des Durchmessers des einzubringenden Gründungsrohres.

Mit der erfindungsgemäßen Gründung ergeben sich die zuvor beschriebenen Vorteile hinsichtlich des effizienteren und kostengünstigeren Herstellens sowie der Tragfähigkeit.

Gemäß der Erfindung ist die Vorrichtung zum Erstellen einer Gründung dadurch gekennzeichnet, dass auf der Arbeitsplattform eine Bohrvorrichtung mit Bohrwerkzeug vorgesehen ist, dessen Bohrdurchmesser wesentlich kleiner als ein Durchmesser des einzubringenden Gründungsrohres ist und dass die Bohrvorrichtung entlang des Umfangsbereichs des einzurammenden Gründungsrohres verstellbar ist. Mit dieser erfindungsgemäßen Vorrichtung kann insbesondere das zuvor beschriebene erfindungsgemäße Verfahren durchgeführt werden. Es ergeben sich hierbei die zuvor beschriebenen Vorteile.

Eine bevorzugte Ausführungsform der Erfindung ergibt sich dadurch, dass die Arbeitsplattform zum Bilden einer Unterwassergründung schwimmend und/oder absenkbar ausgebildet ist. Die Vorrichtung kann somit insbesondere für maritime Einsatzzwecke verwendet werden, insbesondere zum Erstellen einer Gründung für Offshore-Windanlagen oder andere Offshore-Anwendungen.

Die Erfindung wird weiter nachfolgend anhand von bevorzugten Ausführungsbeispielen weiter beschrieben, welche schematisch in den Zeichnungen dargestellt sind. In den Zeichnungen zeigen:
Figur 1 eine schematische perspektivische Ansicht einer erfindungsgemäßen Vorrichtung beim Stellen einer Gründung nach der Erfindung; und
Figur 2 eine schematische Draufsicht auf eine gemäß der Erfindung eingebrachtes Gründungsrohr.

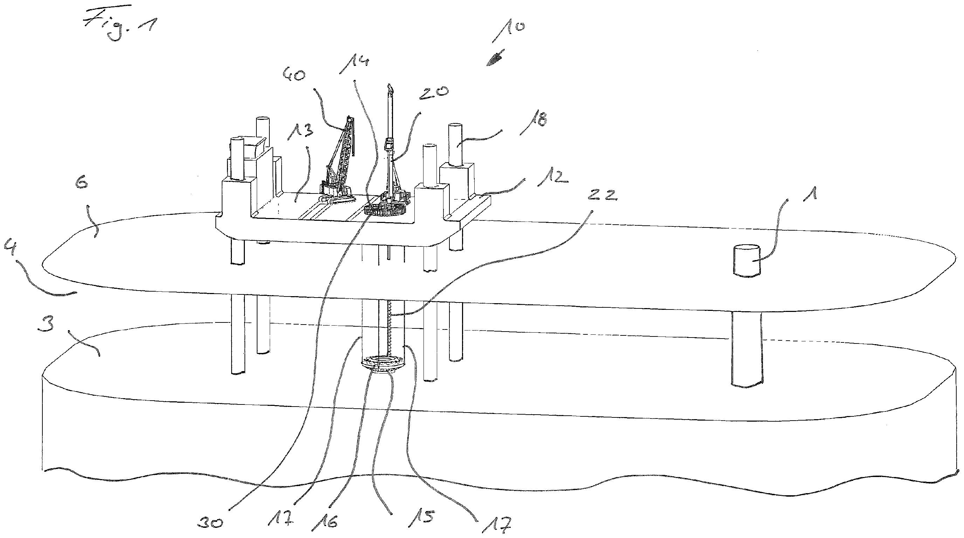

Gemäß Figur 1 ist das Erstellen einer Gründung in einem Boden 3 eines Gewässers 4 dargestellt. Eine erfindungsgemäße Vorrichtung 10 mit einer schwimmfähigen Arbeitsplattform 12 wird zunächst an der gewünschten Position an einer Oberfläche 6 des Gewässers 4 positioniert. Anschließend werden in grundsätzlich bekannter Weise vier Stützen 18 an der Arbeitsplattform 12 abgesenkt, wobei die Stützen 18 im Boden 3 des Gewässers 4 verankert werden. Die Arbeitsplattform 12 kann dann angehoben werden. Die Vorrichtung 10 dient zum Einbringen eines Gründungsrohres 1, welches insbesondere als eine Gründung für eine off-shore-Windenergieanlage dient. Derartige Gründungsrohre 1 weisen einen Durchmesser von mehreren Metern, insbesondere zwischen 5 bis 10 Metern auf.

Vor einem vertikalen Eintreiben oder Einrammen des Gründungsrohres 1 in den Boden 3 wird der Boden 3 ringförmig im Bereich der Wand des Gründungsrohres 1 durch drehendes Einbringen von Bohrungen 5 gelockert. Die Bohrungen 5 werden dabei mittels einer Bohrvorrichtung 20 erstellt, durch welche ein vorzugsweise als Bohrschnecke ausgebildetes Bohrwerkzeug 22 an den gewünschten Positionen in den Boden 3 eingebracht wird.

Im dargestellten Ausführungsbeispiel ist die Bohrvorrichtung 20 ein herkömmliches mobiles Bohrgerät mit einem verfahrbaren Unterwagen und einem darauf verstellbar, insbesondere drehbar angeordneten Oberwagen mit Mast, entlang welchem ein Bohrantrieb zum drehenden Antreiben des Bohrwerkzeuges 22 vertikal verstellbar gelagert ist. Die Bohrvorrichtung 20 kann entlang einer ebenen Arbeitsfläche 13 auf der Arbeitsplattform 12 zu gewünschten Arbeitspositionen verfahren werden. Auf der ebenen Arbeitsfläche 13 ist ein weiteres verfahrbares Zusatzgerät 40 dargestellt. Dieses kann zur Handhabung des Gründungsrohres 1 oder des Bohrwerkzeuges 22 eingesetzt werden. Alternativ kann als Zusatzgerät 40 auch ein weiteres Bohrgerät vorgesehen werden, so dass grundsätzlich die Bohrarbeiten doppelt so schnell durchgeführt werden könnten.

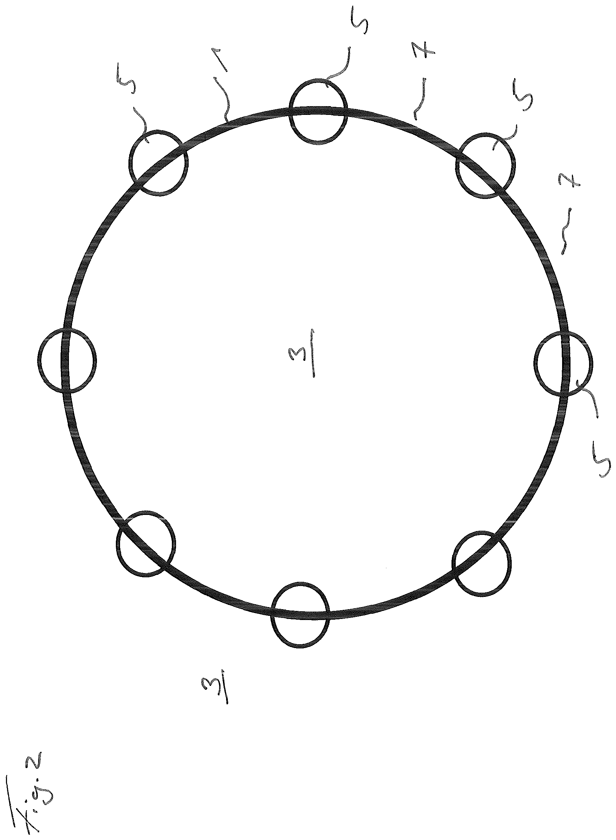

Für ein exaktes Niederbringen der Bohrungen 5, welche schematisch in Figur 2 dargestellt sind, ist entlang eines vertikalen Arbeitsdurchganges an der Arbeitsplattform 12 eine obere Bohrführung 14 zum Führen des Bohrwerkzeuges 22 im oberen Bereich angeordnet. Die Bohrführungen 14, 15 sind vorzugsweise als ringförmige Bohrschablonen ausgebildet. Innerhalb dieser oberen Bohrführung 14 kann die nur schematisch angedeutete Rammvorrichtung 30 zum Einrammen des Gründungsrohres 1 angeordnet sein. Für ein besonders genaues Führen ist eine untere Bohrführung 15 mit rohrförmigen Führungseinrichtungen 16 angeordnet. Die ringförmige untere Bohrführung 15 kann mittels Hubseilen 17 von der Arbeitsplattform 12 bis auf den Grund des Gewässers 4 abgesenkt werden.

Alternativ kann die Rammvorrichtung 30 auch auf einer separaten zweiten Arbeitsplattform angeordnet sein. In diesem Fall wird die erste Arbeitsplattform 12 mit der Bohrvorrichtung 20 nach dem Erstellen der Bohrungen 5 entfernt und durch die zweite Arbeitsplattform mit dem Gründungsrohr 1 und der Rammvorrichtung 30 ersetzt. Nach entsprechender Positionierung wird das Gründungsrohr 1 dann im Bereich der Bohrungen 5 in den Boden 3 eingerammt.

Auf diese Weise können eine Vielzahl von Bohrungen 5 ringförmig entlang eines Umfangs des einzurammenden Gründungsrohres 1 zur Auflockerung des Bodens 3 vorgesehen werden. Die ringförmige Anordnung der Bohrungen 5 ist schematisch in Figur 2 dargestellt. Gemäß dem gezeigten Ausführungsbeispiel sind in den Boden 3 acht Bohrungen 5 niedergebracht. Die Bohrungen 5 sind ringförmig entlang des Umfangs des einzubringenden Gründungsrohres 1 angeordnet, so dass eine Wand des Gründungsrohres 1 die Bohrungen 5 jeweils etwa mittig durchläuft. Die Bohrungen 5 werden so erstellt, dass das beim Bohren abgetragene Bodenmaterial im Wesentlichen in der Bohrung 5 verbleibt. Insbesondere bei hartem Boden wird durch die Bohrungen 5 eine merkliche Auflockerung des Bodens 3 erreicht. Dies erlaubt, nachfolgend das Gründungsrohr 1 mit geringeren Kräften in den Boden 3 einzutreiben oder einzurammen.

Grundsätzlich können die Bohrungen 5 sich berührend oder überlappend in ringförmiger Anordnung erzeugt werden. Im dargestellten Ausführungsbeispiel gemäß Figur 2 sind die Bohrungen 5 beabstandet zueinander ausgebildet, wobei ein Bodensegment 7 mit nicht aufgelockertem Bodenmaterial zwischen den Bohrungen 5 mit gelockertem Bodenmaterial verbleibt.

## Patentansprüche

1. Verfahren zum Erstellen einer Gründung, bei dem ein Gründungsrohr (1) in einen Boden (3) eingerammt wird,
**dadurch gekennzeichnet,**
**dass** vor dem Einrammen mittels eines Bohrwerkzeuges (22), dessen Bohrdurchmesser wesentlich kleiner als ein Durchmesser des Gründungsrohres (1) ist, mindestens eine Bohrung (5) in den Boden im Umfangsbereich des einzubringenden Gründungsrohres (1) erstellt wird, und
**dass** beim Bohren abgetragenes Bodenmaterial im Wesentlichen in der Bohrung (5) verbleibt.

2. Verfahren nach Anspruch 1,
**dadurch gekennzeichnet,**
**dass** mehrere Bohrungen (5) erstellt werden, welche in dem Boden (3) ringförmig entlang des Umfangsbereichs des einzubringenden Gründungsrohres (1) angeordnet werden.

3. Verfahren nach Anspruch 2,
**dadurch gekennzeichnet,**
**dass** die Bohrungen (5) berührend oder überlappend angeordnet werden.

4. Verfahren nach Anspruch 2,
**dadurch gekennzeichnet,**
**dass** benachbarte Bohrungen (5) mit einem Abstand zueinander erstellt werden, wobei ein Bodensegment (7) zwischen den benachbarten Bohrungen (5) verbleibt.

5. Verfahren nach einem der Ansprüche 1 bis 4,
**dadurch gekennzeichnet,**
**dass** die mindestens eine Bohrung (5) bis zu einer Bohrtiefe abgeteuft wird, welche kleiner oder gleich der Einrammtiefe des Gründungsrohres (1) ist.

6. Verfahren nach einem der Ansprüche 1 bis 5,
**dadurch gekennzeichnet,**
**dass** das Gründungsrohr (1) in den Boden (3) mittels einer Rammvorrichtung (30) eingetrieben wird, welche als ein schlagender Rammhammer oder ein oszillierender Rüttler ausgebildet ist.

7. Verfahren nach einem der Ansprüche 1 bis 6,
**dadurch gekennzeichnet,**
**dass** das Gründungsrohr (1) zum Bilden einer Unterwassergründung in den Boden (3) eines Gewässers (4) eingetrieben wird.

8. Verfahren nach Anspruch 7,
**dadurch gekennzeichnet,**
**dass** das Bohrwerkzeug (22) drehend von einer Bohrvorrichtung (20) angetrieben wird, welche entlang des Umfangs des einzubringenden Gründungsrohres (1) auf einer Arbeitsplattform (12) verstellbar ist.

9. Verfahren nach Anspruch 8,
**dadurch gekennzeichnet,**
**dass** die Arbeitsplattform (12) an der Oberfläche des Gewässers (4) schwimmt oder auf den Boden des Gewässers abgesenkt wird.

10. Verfahren nach Anspruch 8 oder 9,
**dadurch gekennzeichnet,**
**dass** an der Arbeitsplattform (12) mindestens eine ringförmige Bohrführung (14, 15) vorgesehen ist, welche entsprechend den Positionen der einzubringenden Bohrungen (5) Führungseinrichtungen (16) für das Bohrwerkzeug (22) aufweist.

11. Gründung mit einem Gründungsrohr (1), welches in einen Boden (3) eingerammt ist, nach einem Verfahren nach einem der Ansprüche 1 bis 10,
**dadurch gekennzeichnet,**
**dass** in dem Boden (3) im Umfangsbereich des Gründungsrohres (1) vor dem Einrammen mindestens eine Bohrung (5) eingebracht ist, dessen Bohrungsdurchmesser wesentlich kleiner als ein Durchmesser des Gründungsrohres (1) ist, und
**dass** die mindestens eine Bohrung (5) mit Bodenmaterial verfüllt ist, welches beim Erstellen der Bohrung (5) anfällt.

12. Vorrichtung zum Erstellen einer Gründung mit Gründungsrohr (1) im Boden (3), zum Durchführen eines Verfahrens nach einem der Ansprüche 1 bis 10, mit einer Arbeitsplattform (12) mit einer Rammvorrichtung (30) zum Einrammen des Gründungsrohres (1) in den Boden (3),
**dadurch gekennzeichnet,**
**dass** auf der Arbeitsplattform (12) eine Bohrvorrichtung (20) mit Bohrwerkzeug (22) vorgesehen ist, dessen Bohrdurchmesser wesentlich kleiner als ein Durchmesser des einzubringenden Gründungsrohres (1) ist, und
**dass** die Bohrvorrichtung (20) entlang eines Umfangsbereichs des einzurammenden Gründungsrohres (1) verstellbar ist.

13. Vorrichtung nach Anspruch 12,
**dadurch gekennzeichnet,**
**dass** die Arbeitsplattform (12) zum Bilden einer Unterwassergründung schwimmend und/oder absenkbar ausgebildet ist.

## Claims

1. Method to construct a foundation where a foundation pipe (1) is driven into a soil (3),
**characterised in**
**that** before the driving-in at least one bore (5) is executed into the soil in the perimeter area of the foundation pipe (1) to be installed using a drilling tool (22), the diameter of which is significantly smaller than a diameter of the foundation pipe (1) and
**that** the spoil excavated during drilling remains to a large extent in the bore (5).

2. Method according to claim 1,
**characterised in**
**that** several bores (5) are executed which are arranged in the soil (3) in circular form along the perimeter area of the foundation pipe (1) to be installed.

3. Method according to claim 2,
**characterised in**
**that** the bores (5) are arranged in such a way that they touch each other or overlap.

4. Method according to claim 2,
**characterised in**
**that** neighbouring bores (5) are executed with a distance from each other whereupon a soil segment (7) between the neighbouring bores (5) remains.

5. Method according to one of the claims 1 to 4,
**characterised in**
**that** the at least one bore (5) is deepened to a drill depth which is less than or is the same as the driving depth of the foundation pipe (1).

6. Method according to one of the claims 1 to 5,
**characterised in**
**that** the foundation pipe (1) is driven in the soil (3) using a driving equipment (30) which is provided either a percussive drive hammer or an oscillating vibrator.

7. Method according to one of the claims 1 to 6,
**characterised in**
**that** the foundation pipe (1) is driven into the soil (3) of a body of water to construct an underwater foundation.

8. Method according to claim 7,
**characterised in**
**that** the drilling tool (22) is driven rotationally by a drilling apparatus (20) which can be moved on the work platform (12) along the perimeter of the foundation pipe (1) to be installed.

9. Method according claim 8,
**characterised in**
**that** the work platform (12) floats on the water surface (4) or is lowered to the bottom of the body of water.

10. Method according to one of the claims 8 or 9,
**characterised in**
**that** there is provided at least one circular drill guide (14, 15) at the work platform (12) which has guidance devices (16) for the drilling tool (22) in accordance with the locations of the bores (5) to be installed.

11. Foundation with a foundation pipe (1) which is driven into a soil (3) according to a method according to one of the claims 1 to 10,
**characterised in**
**that** at least one bore (5) is installed in the soil in the perimeter area of the foundation pipe (1) before driving in, the diameter of that bore is significantly smaller than a diameter of the foundation pipe (1) and
**that** at least one bore (5) is filled with soil material generated during constructing the bore (5).

12. Apparatus to construct a foundation with a foundation pipe (1) in the soil (3) to carry out a method according to one of the claims 1 to 10 with a work platform (12) including a driving equipment (30) to drive the foundation pipe (1) into the soil,
**characterised in**
**that** there is provided a drilling apparatus (20) with drilling tool (22) on the work platform (12), the drill diameter of which is significantly smaller than a diameter of the pipe (1) to be installed, and
**that** the drilling apparatus (20) can be moved along a perimeter area of the foundation pipe (1) to be driven in.

13. Method according to claim 12,
**characterised in**
**that** the work platform (12) to install an underwater foundation is constructed in such a way that it can float and/or that it can be lowered.

## Revendications

1. Procédé pour l'établissement d'une fondation, dans lequel un tube de fondation (1) est enfoncé dans un sol (3),
**caractérisé en ce**
**qu'**avant l'enfoncement au moyen d'un outil de forage (22), dont le diamètre de forage est sensiblement plus petit qu'un diamètre du tube de fondation (1), au moins un forage (5) est réalisé dans le sol dans la zone périphérique du tube de fondation (1) à introduire et
en ce que le matériau de sol enlevé lors du forage reste pour l'essentiel dans le forage (5).

2. Procédé selon la revendication 1,
**caractérisé en ce**
**que** plusieurs forages (5) sont réalisés, lesquels sont disposés en rond le long de la zone périphérique du tube de fondation (1) à introduire.

3. Procédé selon la revendication 2,
**caractérisé en ce**
**que** les forages (5) sont disposés de manière à se toucher ou à se chevaucher.

4. Procédé selon la revendication 2,
**caractérisé en ce**
**que** des forages (5) adjacents sont réalisés à une distance les uns des autres, un segment de sol (7) restant entre les forages (5) adjacents.

5. Procédé selon l'une quelconque des revendications 1 à 4,
**caractérisé en ce**
**que** l'au moins un forage (5) est creusé jusqu'à une profondeur de forage, qui est inférieure ou égale à la profondeur d'enfoncement du tube de fondation (1).

6. Procédé selon l'une quelconque des revendications 1 à 5,
**caractérisé en ce**
**que** le tube de fondation (1) est enfoncé dans le sol (3) au moyen d'un dispositif de battage (30), qui est réalisé sous la forme d'un marteau batteur à percussion ou d'un agitateur à oscillations.

7. Procédé selon l'une quelconque des revendications 1 à 6,
**caractérisé en ce**
**que** le tube de fondation (1) est enfoncé dans le sol (3) d'un cours d'eau (4) afin de former une fondation sous-marine.

8. Procédé selon la revendication 7,
**caractérisé en ce**
**que** l'outil de forage (22) est entraîné en rotation par un dispositif de forage (20), qui peut être ajustée le long de la périphérie du tube de fondation (1) à introduire sur une plate-forme de travail (12).

9. Procédé selon la revendication 8,
**caractérisé en ce**
**que** la plate-forme de travail (12) flotte à la surface du cours d'eau (4) ou est abaissée sur le sol du cours d'eau.

10. Procédé selon la revendication 8 ou 9,
**caractérisé en ce**
**qu'**est prévu, au niveau de la plate-forme de travail (12), au moins un guidage de forage (14, 15) présentant une forme annulaire, lequel présente des systèmes de guidage (16) pour l'outil de forage (22) de manière à correspondre aux positions des forages (5) à pratiquer.

11. Fondation comprenant un tube de fondation (1), qui est enfoncé dans un sol (3), selon le procédé selon l'une quelconque des revendications 1 à 10,
**caractérisée en ce**
**qu'**est pratiqué, dans le sol (3), dans la zone périphérique du tube de fondation (1), avant l'enfoncement, au moins un forage (5), dont le diamètre de forage est sensiblement plus petit qu'un diamètre du tube de fondation (1), et
en ce que l'au moins un forage (5) est rempli d'un matériau de sol, provenant de la réalisation du forage (5).

12. Dispositif pour l'établissement d'une fondation comprenant un tube de fondation (1) dans le sol (3), servant à mettre en oeuvre un procédé selon l'une quelconque des revendications 1 à 10, comprenant une plate-forme de travail (12) pourvue d'un dispositif d'enfoncement (30) servant à enfoncer le tube de fondation (1) dans le sol (3),
**caractérisé en ce**
**qu'**est prévu, sur la plate-forme de travail (12), un dispositif de forage (20) pourvu d'un outil de forage (22), dont le diamètre de forage est sensiblement plus petit qu'un diamètre du tube de fondation (1) à introduire, et
en ce que le dispositif de forage (20) peut être ajusté le long d'une zone périphérique du tube de fondation (1) à enfoncer.

13. Dispositif selon la revendication 12,
**caractérisé en ce**
**que** la plate-forme de travail (12) est réalisée de manière à flotter et/ou de manière à pouvoir être abaissée afin de former une fondation sous-marine.
